# EUROPEAN PATENT APPLICATION

(11) **EP 1 435 683 A2**
(43) Date of publication of application: **07.07.2004**
(21) Application number: 03257656.3
(22) Date of filing: 05.12.2003
(51) Int. Cl.: H02J 7/00

(54) **Electronic device with battery charging unit**

(30) Priority: 02.01.2003 KR 2003000112
(71) Applicant: Samsung Electronics Co., Ltd., Suwon 442-742, Gyeonggi-do (KR)
(72) Inventor: Cho, Sung-mun, Taean-eup, Kwaseong-gun, Gyeonggi-do (KR)
(74) Representative: Geary, Stuart Lloyd

(57) **Abstract**

A digital device capable of recharging a rechargeable battery, comprising a current demand detection unit (10) for detecting a consuming current input to the digital device through an adapter, a control unit (20), a charging current detection unit (40) for detecting the battery recharging current as the battery is recharged, and a charging control unit (30) for regulating the consuming current to the rechargeable battery in proportion to a pulse width modulation control signal output from the control unit (20) and the battery recharging current detected by the charging current detection unit (40).

## Description

The present invention relates to battery-powered electronic device including a DC power input, battery coupling means for coupling the device to a rechargeable battery for charging thereof and the supply of power therefrom and a battery charging circuit for providing current from said input to said coupling means for charging a battery coupled to the device thereby.

Rechargeable batteries are widely used in portable electronic devices such as, for example, PDAs.

However, there is a problem in that the recharging needs to be started automatically when the device is provided with power from an external source. In addition, there is another problem in that an expensive integrated circuit (IC) is required to separately control battery recharging, and this increases production costs.

There is still another problem in the display means of conventional portable electronic devices. The conventional devices have such simple display means for displaying the battery charge state that the various states of the device cannot be displayed to a user as they occur during recharging and discharging of the battery.

A battery-powered electronic device according to the present invention is characterised by a current sensor for sensing the current demand of the device, excluding current required for battery charging, and the battery charging circuit being responsive to the output of the sensor to control the battery charging current in dependence thereon.

Preferably, the battery charging circuit includes a charging current feedback control loop.

Preferably, the battery charging circuit comprises a pulse width modulator for producing a PWM signal in dependence on the output of the current sensor and an integrator for integrating the PWM signal from the pulse width modulator, and the output of the integrator provides the set point for said control loop. S

Preferably, the pulse width modulator is a microprocessor.

Preferably, the microprocessor is responsive to the voltage across battery positive and negative terminals of the coupling means to control battery charging according to a trickle charge method or an non-trickle charge method.

Other preferred and optional features are set forth in claims 6 to 39 appended hereto.

An embodiment of the present invention will now be described, by way of example, with reference to the accompanying drawings, in which:
Figure 1 is a block diagram of a digital device having battery charging means according to the present invention;
Figure 2 is a circuit diagram showing in detail the digital device of Figure 1;
Figure 3 is a flowchart illustrating a method of controlling a pulse width modulator by the microprocessor of Figure 2;
Figure 4 is a flowchart illustrating a method of recharging the battery in the digital device; and
Figure 5 is a graph showing the change of the duty cycle of a PWM signal in the microprocessor according to the variations in the current demand.

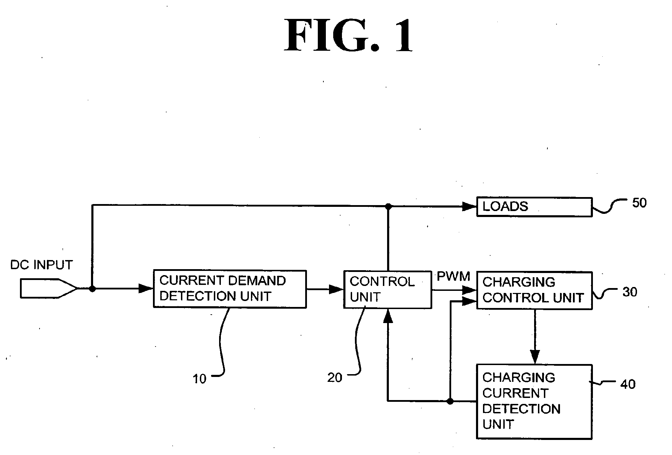

Referring to Figure 1, a battery charging unit 100 comprises a current demand detection unit 10, a control unit 20, a charging control unit 30, a charging current detection unit 40 and the loads 50. The term "loads" is used to refer to the other circuits of the device, e.g. a processor and a display device, which draw current during operation of the device.

The current demand detection unit 10 detects the current flowing into the device from an external source, e.g. a mains adapter (not shown).

The charging current detection unit 40 detects the battery charging current as the battery is recharged.

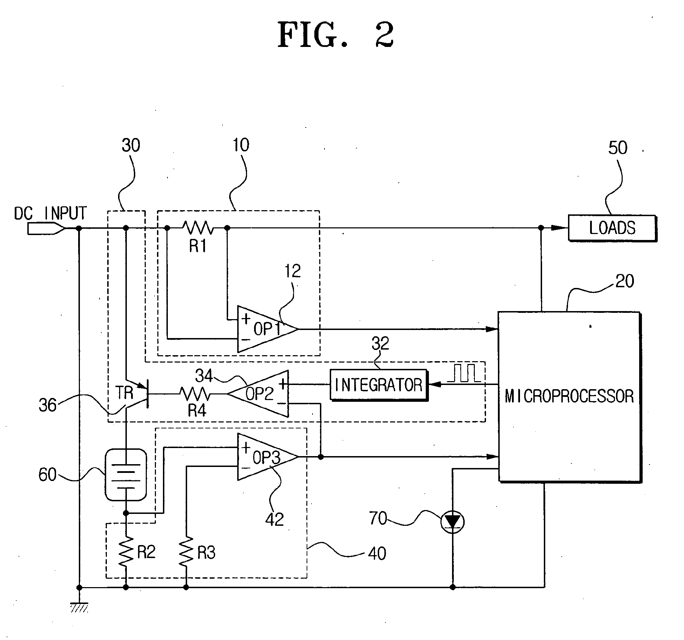

The charging control unit 30 regulates the current fed to the rechargeable battery 60 (Figure 2) in dependence on a pulse width modulation (PWM) control signal output from the control unit 20 and the battery charging current detected by the charging current detection unit 40.

The control unit 20 outputs the PWM control signal to the charging control unit 30. The PWM control signal has a duty cycle which is adjusted according to the current detected by the current demand detection unit 10.

In Figure 2, the functional blocks shown in Figure 1 are outlined by dashed lines.

Referring to Figure 2, the current demand detection unit 10 comprises a first current sensing resistor R1 in series with the loads 50 and a first operational amplifier 12 for amplifying the voltage across the first current sensing resistor R1. The non-inverting (+) and inverting (-) inputs of the first operational amplifier 12 are connected to respective ends of the current sensing resistor R1.

The charging current detection unit 40 includes a second current sensing resistor R2, connected between the battery 60 and ground, for sensing the battery charging current and a second operational amplifier 42 for amplifying the voltage across the second current sensing resistor R2. The non-inverting input of the second operational amplifier 42 is connection to a point between the second current sensing resistor R2 and the negative terminal of the battery 60. The inverting input of the second operation amplifier 42 is connection to ground by another resistor R3.

The charging control unit 30 comprises an integrator 32 for smoothing the PWM control signal, a switching control portion 34 for outputting a switching control signal by comparing the output signal from the integrator 32 with the battery charging current, and a switching portion 36 for controlling the charging current according to the switching control signal output from the switching control portion 34. The switching control portion 34 comprises a third operational amplifier 34 for amplifying signals, in which the non-inverting input is connected to the converted DC signal of the PWM control signal, output by the integrator 32, and the inverting input is connected to output of the second operational amplifier 42. The switching portion 36 comprises a bipolar transistor (TR). The base of the transistor TR is connected to the output of the second operational amplifier 34 via a resistor R4.

The battery charging unit 100 further includes a display means 70, e.g. an LED, for displaying the state of the battery 60. Other display devices, well known to those skilled in the art, could also be used for the display means 70.

The microprocessor 20 controls the overall operation of the battery charging unit 100 and, specifically, the microprocessor 20 outputs the PWM control signal to the integrator 32 so as to control the charging of the battery 60 according to the device's current demand, and operates the LED 70 according to the charged state of the battery 60.

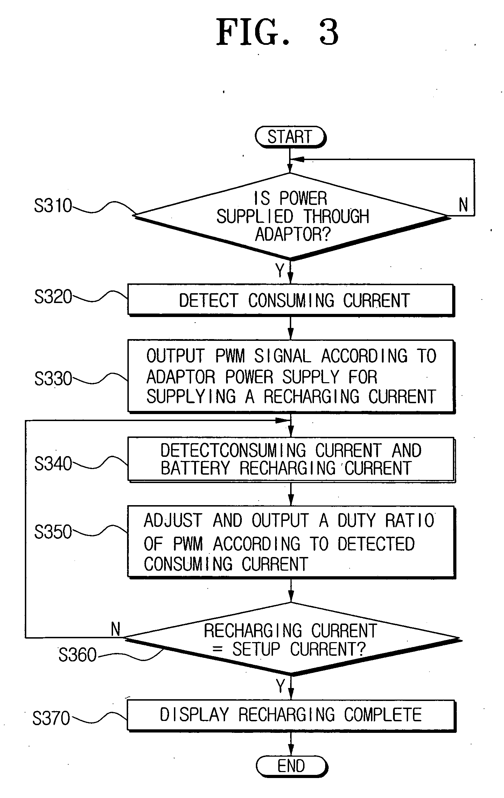

Referring to Figure 3, when DC power is supplied from an external source (S310), the microprocessor 20 first detects the current demand of the device by means of the output signal of the first operational amplifier 12 (S320). The microprocessor 20 outputs the PWM control signal to the charging control unit 30 in accordance with the device's current demand so that a charging current is supplied to the battery 60 (S330). The integrator 32 smoothes the PWM control signal and outputs a DC signal to the third operational amplifier 34. The output of the third operational amplifier 34 controls the transistor TR via the resistor R4 and then the transistor TR controls the supply of current from the external source to the battery 60 according to the DC signal output by the third operational amplifier 34. The transistor TR is turned on according to the magnitude of the initial current demand. As the device's current demand increases and decreases (step S340), the microprocessor 20 outputs (continuously) the PWM signal with a varying duty cycle according to the increases and decreases in the detected current demand (S350).

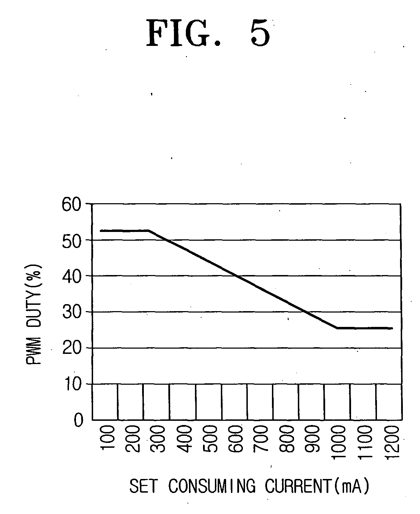

Figure 5 shows the change of the PWM signal duty cycle output from the microprocessor 20 as the device's current demand increases and decreases. When the microprocessor 20 transmits the PWM control signal with a changed duty cycle, the transistor TR controls the current to the battery 60, by an amount adjusted in proportion to the changed duty cycle of the PWM control signal.

Therefore, as current is supplied to the battery 60, battery charging is performed. Concurrently, the microprocessor 20 detects the battery charging current while the battery 60 is being charged, using the second current sensing resistor R2 and the third operational amplifier 42 (S340). The output of the third operational amplifier 34 is used for controlling the transistor TR, along with the DC signal which is output from the integrator 32. The microprocessor 20 is able to recognize the battery charge state from the sensed battery charging current. Accordingly, when the detected battery charging current reaches a predetermined current level ("Yes" path from decision step S360), the microprocessor 20 indicates, using the LED 70 (S370). that battery charging complete. If, however, the charging current does not equal the set up current, the method returns to continuously detecting the current demand and battery charging current step in step S340 ("No" path from decision step S360).

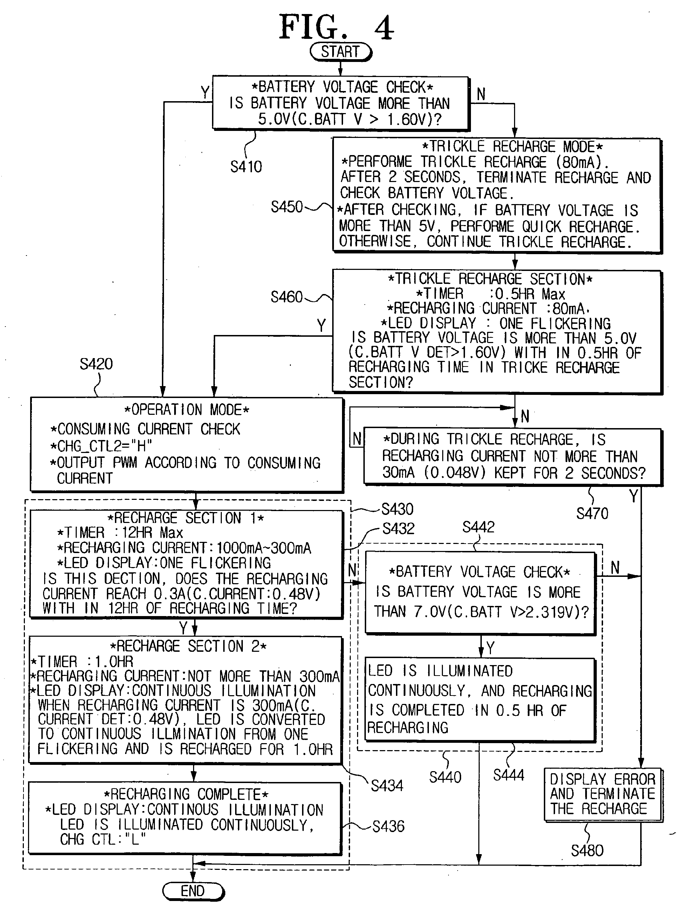

Referring to Figure 4, if the voltage of the battery 60 is more than 5V ("Yes" path from decision step S410), the microprocessor 20 determines that the battery 60 is partially discharged and performs the charging operation according to the state of the digital device being used. To perform the charging operation according to the state of the digital device, the microprocessor 20 determines its current demand and outputs a PWM control signal according to the current demand (S420). Next, current is fed to the battery 60, in accordance with the PWM control signal, for charging the battery 60 (S430). Note that step S430 comprises steps S432, S434 and S436. After outputting the PWM control signal in step S420, the microprocessor 20 determines whether the battery charging current is between 1000 mA and 300 mA inclusive in decision step S432. If it is the microprocessor 20 flashes the LED 70 one time.

If the charging current reaches 0.3A within 12 hours, which is a predetermined maximum recharge time, the microprocessor 20 switches to a second charge mode ("Yes" path from decision step S432) in step S434. In step S434 the LED 70 is illuminated continuously and after one hour of recharging the battery 60, a "charging complete" message is displayed (S436). When charging is completed, the LED 70 is illuminated continuously. In the event that the charging current does not reach 0.3A within 12 hours ("No" path from decision step S432), the battery voltage is checked by the microprocessor 20 (S442). If the battery voltage is more than 7.0V ("Yes" path from decision step S442), the LED 70 is continuously illuminated, and charging is completed after half an hour of recharging (S444). However, if the battery voltage is not more than 7.0V ("No" path from decision step S442), an error message is displayed and the recharging operation is terminated (S480).

Referring back to decision step S410, if the battery voltage is less than or equal to 5V, the microprocessor 20 controls the charging in a trickle charge mode (S450). In the trickle charge mode, the microprocessor 20 supplies 80 mA to the battery 60 for half an hour regardless of the operation of the digital device. If the battery voltage is more than 5V after 2 seconds of the trickle charging, a quick charge is performed. Otherwise, the trickle charging is continued. When the trickle charging begins (decision step S460), the microprocessor 20 flashes the LED 70. If after one half hour of trickle charging, the battery voltage is more than 5V step S420 is performed by the microprocessor 20 ("Yes" path from decision step S460). If the battery voltage is less than or equal to 5V after one half hour of trickle charging, the method proceeds to decision step S470. In decision step S470, it is determined whether the charging current is not more than 30 mA for two seconds during the trickle charging. If the recharging current is not more than 30 mA for 2 seconds ("Yes" path from decision step S470), an error message is displayed and the recharging operation is terminated (S480). If, however, during trickle charging the recharging current is more than 30 mA, or, it is less than 30 mA, but also for less than 2 seconds, the method continues to recheck the trickle charging current magnitude and duration in decision step S470.

The method discussed above for battery charging of the digital device divides the battery charging into two modes according to the battery's residual capacity. These modes are an operation mode and a trickle mode. If the battery residual capacity is greater than a specific criterion, the operation of the digital device and the charging thereof are performed simultaneously. Otherwise, the battery 60 is first charged to exceed the criterion and then the operation of the digital device and charging thereof are performed simultaneously.

The may be different numbers of LEDs 70, different number of times that the or each LED is energised or flashes and different set up times. Therefore, a plurality of the LEDs 70 can be applied for displaying the recharging state of the battery 60, and it is possible to apply a different number of times of flickering the LED 70, as well as a different setup time. In addition various states can be displayed through the LED 70, such as errors occurring during the battery recharging caused by overcurrent, overvoltage, battery defective, and suspension of charging.

The battery charging unit 100 can operate and charge the battery 60 simultaneously with the power supplied from the adapter. Embodiments of the present invention can reduce the material costs as well as the number of parts, since the control unit controls the recharging operation instead of the high-priced IC.

In addition, since the control unit 20 controls the recharging operation, errors such as overcurrent, overvoltage, battery-defective, suspension, as well as completion of recharging, are freely displayed on the display means. Therefore, users can recognize the recharging state of the battery 60 easily and conveniently.

## Claims

1. A battery-powered electronic device including a DC power input (DC INPUT), battery coupling means for coupling the device to a rechargeable battery (60) for charging thereof and the supply of power therefrom, and a battery charging circuit (20, 30, 40) for providing current from said input to said coupling means for charging a battery (60) coupled to the device thereby, **characterised by** a current sensor (10) for sensing the current demand of the device, excluding current required for battery charging, and the battery charging circuit (20, 30, 40) being responsive to the output of the sensor (10) to control the battery charging current in dependence thereon.

2. A device according to claim 1, wherein the battery charging circuit (20, 30, 40) includes a charging current feedback control loop (34, R4, 36, 40).

3. A device according to claim 2, wherein the battery charging circuit (20, 30, 40) comprises a pulse width modulator (20) for producing a PWM signal in dependence on the output of the current sensor (10) and an integrator (32) for integrating the PWM signal from the pulse width modulator (20), and the output of the integrator (32) provides the set point for said control loop (34, R4, 36, 40).

4. A device according to claim 3, wherein the pulse width modulator is a microprocessor (20).

5. A device according to claim 4, wherein the microprocessor (20) is responsive to the voltage across battery positive and negative terminals of the coupling means to control battery charging according to a trickle charge method or an non-trickle charge method.

6. A digital device capable of recharging a rechargeable battery comprising;
a consuming current detect unit for detecting a consuming current input to the digital device;
a control unit;
a recharging current detect unit for detecting the battery recharging current as the battery is recharged; and
a recharging control unit for regulating the consuming current to the rechargeable battery in proportion to a control signal output from the control unit and the battery recharging current detected by the recharging current detect control unit.

7. The digital device capable of recharging a rechargeable battery according to claim 6, wherein the control signal includes a pulse width modulation signal.

8. The digital device capable of recharging a rechargeable battery according to claim 7, wherein the pulse width module control signal has a duty ratio adjusted according to the consuming current detected by the consuming current detect unit.

9. The digital device capable of recharging a rechargeable battery according to claim 6, wherein the consuming current detect unit comprises:
a first current detecting resistor for detecting the consuming current; and
a first operational amplifier, wherein a first end of the first current detecting resistor is coupled to an inverting input of the first operational amplifier and the second end of the first current detecting resistor is coupled to the non-inverting input of the first operational amplifier.

10. The digital device capable of recharging a rechargeable battery according to claim 6, wherein the recharging current detect unit comprises:
a second current detecting resistor;
a third current detecting resistor for detecting the rechargeable battery recharging current; and
a second operational amplifier, wherein a first end of the second current detecting resistor is coupled to a non-inverting input of the second operational amplifier and to the negative terminal of the rechargeable battery, and a first end of the third current detecting resistor is coupled to an inverting input of the third operational amplifier, and further wherein the second end of the second and third current detecting resistors are coupled together to earth ground.

11. The digital device capable of recharging a rechargeable battery according to claim 1, wherein the recharging control unit comprises:
an integrator, an input of which is coupled to a first output of the control unit;
a third operational amplifier;
a fourth current detecting resistor; and
a transistor, wherein a first output of the integrator is coupled to a non-inverting input of the third operational amplifier, an inverting input of the third operational amplifier is coupled to an output of the recharging current detect unit, a first end of the fourth current detecting resistor is coupled to an output of the third operational amplifier and a second end of the fourth current detecting resistor is coupled to a first input of the transistor, a second input of the transistor is coupled to a power source, and an output of the transistor is coupled to a positive terminal of the rechargeable battery.

12. The digital device capable of recharging a rechargeable battery according to claim 6, wherein the control unit includes a microprocessor.

13. A method for controlling a digital device to recharge current of a rechargeable battery comprising:
detecting a consuming current input to the digital device;
detecting a battery recharging current as the battery is recharged; and regulating the consuming current to the rechargeable battery in proportion to a control signal and the detected battery recharging current.

14. The method for controlling recharging current of a rechargeable battery according to claim 13, wherein control signal is a pulse width modulation signal.

15. The method for controlling recharging current of a rechargeable battery according to claim 13 further comprising:
adjusting the control signal according to the detected consuming current.

16. The method for controlling recharging current of a rechargeable battery according to claim 13, further comprising:
displaying a recharging complete message if the recharging current equals a predetermined value.

17. The method for controlling recharging current of a rechargeable battery according to claim 15, wherein the step of adjusting the control signal according to the detected consuming current comprises:
determining whether the magnitude of the consuming current increases or decreases; and
varying the pulse width modulation signal duty cycle in accordance with the increase or decrease of the magnitude of the consuming current.

18. The method for controlling recharging current of a rechargeable battery according to claim 13, further comprising:
outputting a control signal according to a magnitude of the consuming current.

19. The method for controlling recharging current of a rechargeable battery according to claim 13, wherein the step of outputting a control signal according to a magnitude of the consuming current comprises:
maintaining the pulse width modulation duty cycle substantially at a first constant for a first range of consuming current values;
maintaining the pulse width modulation duty cycle substantially at a second constant for a second range of consuming current values; and
varying the pulse width modulation duty cycle linearly from about the first constant to about the second constant, for a third range of consuming current values.

20. The method for controlling recharging current of a rechargeable battery according to claim 18, wherein the first constant is in the range of about 50 to about 60 percent duty cycle.

21. The method for controlling recharging current of a rechargeable battery according to claim 18, wherein the second constant is in the range of about 20 to about 30 percent duty cycle.

22. The method for controlling recharging current of a rechargeable battery according to claim 18, wherein the first range of consuming current values is in the range of at or about 0 milliamps to at or about 275 milliamps.

23. The method for controlling recharging current of a rechargeable battery according to claim 18, wherein the second range of consuming current values is in the range of about 950 milliamps to about 1200 milliamps.

24. The method for controlling recharging current of a rechargeable battery according to claim 18, wherein the third range of consuming current values is in the range of about 275 milliamps to about 950 milliamps.

25. A method for recharging a rechargeable battery in a digital device comprising:
determining whether the battery voltage is greater than 5 volts, and if so, determining that the battery is partially discharged and performing a recharge operation according to the state of the digital device being used.

26. The method according to claim 25 wherein the step of performing a recharge operation according to the state of the digital device being used comprises;
determining the consuming current;
outputting a control signal according to the consuming current; and
supplying a portion of the consuming current according to the pulse width modulation control signal to the rechargeable battery for recharging.

27. The method according to claim 26 wherein the control signal includes a pulse width modulation signal.

28. The method according to claim 27 wherein the step of supplying a portion of the consuming current according to the pulse width modulation control signal to the rechargeable battery comprises;
determining whether the battery recharging current is between approximately 1000 and 300 milliamps, and if so, illuminating an illumination device at least one time; and
determining if the recharging current reaches 300 milliamps within 12 hours, and if so, switching to a second recharge mode.

29. The method according to claim 27 wherein the step of switching to a second recharge mode comprises:
charging the rechargeable battery for substantially one hour at a recharging current of less than or equal to 300 milliamps and illuminating the illumination device for substantially one hour; and
illuminating the illumination device continuously after the first time period has elapsed.

30. The method according to claim 26, further comprising:
determining that the rechargeable current does not reach 300 milliamps within 12 hours, and checking the battery voltage; and
determining whether the battery voltage is greater than 7 volts, and if so, illuminating an illumination device continuously.

31. The method according to claim 30, further comprising:
determining that the battery voltage is less than or equal to 7 volts; and
displaying an error message and terminating the recharge.

32. The method according to claim 25, further comprising:
determining that the battery voltage is less than or equal to 5 volts; and
charging the battery for approximately 2 seconds at about 80 milliamps; and
determining whether the battery voltage is more than 5 volts, and if so, performing a quick recharge, otherwise performing a trickle recharge.

33. The method according to claim 32, wherein performing the trickle recharge comprises:
supplying approximately 80 milliamps to the battery for approximately one-half hour and illuminating the illumination device momentarily; and
determining whether the battery voltage is greater than approximately 5 volts approximately one half hour after of recharging, and if so, performing a recharge operation according to the state of the digital device being used.

34. The method according to claim 33 wherein the step of performing a recharge operation according to the state of the digital device being used comprises;
determining the consuming current;
outputting a pulse width modulation control signal according to a magnitude of the consuming current; and
supplying a portion of the consuming current according to the pulse width modulation control signal to the rechargeable battery for recharging.

35. The method according to claim 34 wherein the step of supplying a portion of the consuming current according to the pulse width modulation control signal to the rechargeable battery comprises;
determining whether the battery recharging current is between approximately 1000 and 300 milliamps, and if so, illuminating an illumination device at least one time; and
determining if the recharging current reaches 300 milliamps within 12 hours, and if so, switching to a second recharge mode.

36. The method according to claim 35 wherein the step of switching to a second recharge mode comprises:
charging the rechargeable battery for substantially one hour at a recharging current of less than or equal to 300 milliamps and illuminating the illumination device for substantially one hour; and
illuminating the illumination device continuously after the first time period has elapsed.

37. The method according to claim 33, further comprising:
determining that the rechargeable current does not reach 300 milliamps within 12 hours, and checking the battery voltage; and
determining whether the battery voltage is greater than 7 volts, and if so, illuminating an illumination device continuously.

38. The method according to claim 37, further comprising:
determining that the battery voltage is less than or equal to 7 volts; and
displaying an error message and terminating the recharge.

39. The method according to claim 32, further comprising:
determining that the battery voltage is less than or equal to approximately 5 volts within approximately one half hour; and
determining whether the recharge current is not more than approximately 30 milliamps for approximately 2 seconds, and if not, continuing to recheck the magnitude and duration of the trickle recharge and if so, displaying an error message and terminating the recharge.
